# EUROPEAN PATENT SPECIFICATION

(11) **EP 2 453 652 B1**
(45) Date of publication and mention of the grant of the patent: **04.09.2019**
(21) Application number: 09846982.8
(22) Date of filing: 06.07.2009
(51) Int. Cl.: H04N 19/30, H04N 19/37, H04N 19/61, H04N 19/46

(54) **TRANSMISSION METHOD, RECEIVING METHOD AND DEVICE FOR SCALABLE VIDEO CODING FILES**
ÜBERTRAGUNGSVERFAHREN, EMPFANGSVERFAHREN UND VORICHTNG FÜR SKALIERBARE VIDEOKODIERUNGSDATEIEN
PROCÉDÉ DE TRANSMISSION, PROCÉDÉ DE RÉCEPTION ET DISPOSITIF POUR FICHIERS DE CODAGE VIDÉO ÉCHELONNABLE

(43) Date of publication of application: 16.05.2012
(73) Proprietor: Huawei Technologies Co., Ltd., Longgang District Shenzhen, Guangdong 518129 (CN)
(72) Inventor: ZHANG, Yuanyuan, Shenzhen Guangdong 518129 (CN); LIU, Guangyuan, Shenzhen Guangdong 518129 (CN); YUE, Peiyu, Shenzhen Guangdong 518129 (CN); SHI, Teng, Shenzhen Guangdong 518129 (CN); TIAN, Yonghui, Shenzhen Guangdong 518129 (CN); YUAN, Weizhong, Shenzhen Guangdong 518129 (CN); ZHANG, Chuxiong, Shenzhen Guangdong 518129 (CN)
(74) Representative: Pfenning, Meinig & Partner mbB
(86) International application number: PCT/CN2009/072650
(87) International publication number: WO 2011/003231

(56) References cited:
- WO-A1-2006/109154
- WO-A1-2007/080223
- WO-A2-2007/080502
- CN-A- 101 120 593
- CN-A- 101 189 881
- CN-A- 101 356 822
- CN-A- 101 390 399
- US-A1- 2006 233 241
- US-A1- 2007 016 594
- US-A1- 2007 110 150
- AMON P ET AL: "File Format for Scalable Video Coding", IEEE TRANSACTIONS ON CIRCUITS AND SYSTEMS FOR VIDEO TECHNOLOGY, IEEE SERVICE CENTER, PISCATAWAY, NJ, US, vol. 17, no. 9, 1 September 2007 (2007-09-01), pages 1174-1185, XP011193013, ISSN: 1051-8215, DOI: 10.1109/TCSVT.2007.905521
- "VM Study Text for Scalable Video Coding (SVC) File Format", 73. MPEG MEETING;25-07-2005 - 29-07-2005; POZNAN; (MOTION PICTURE EXPERT GROUP OR ISO/IEC JTC1/SC29/WG11),, no. N7477, 13 August 2005 (2005-08-13), XP030014038, Poznan, PL ISSN: 0000-0345
- YE-KUI WANG ET AL: "ISO/IEC 14496-15/FPDAM 2 (SVC File Format)", 82. MPEG MEETING; 22-10-2007 - 26-10-2007; SHENZHEN; (MOTION PICTURE EXPERT GROUP OR ISO/IEC JTC1/SC29/WG11),, no. M15002, 23 October 2007 (2007-10-23), XP030043608,
- THOMAS RATHGEN ET AL: "Proposal for SVC File Format Specification", 73. MPEG MEETING; 25-07-2005 - 29-07-2005; POZNAN; (MOTION PICTUREEXPERT GROUP OR ISO/IEC JTC1/SC29/WG11),, no. M12345, 20 July 2005 (2005-07-20), XP030041029, ISSN: 0000-0244
- PAILA T ET AL: "FLUTE - File Delivery over Unidirectional Transport", NETWORK WORKING GROUP. REQUEST FOR COMMENTS: 3926,, no. RFC 3926, 1 October 2004 (2004-10-01), pages 1-36, XP007920513,
- TIHAO CHIANG ET AL: "Transporting MPEG-4 FGS with receiver-driven reliable multicast", 61. MPEG MEETING; 22-07-2002 - 26-07-2002; KLAGENFURT; (MOTION PICTUREEXPERT GROUP OR ISO/IEC JTC1/SC29/WG11),, no. M8607, 25 July 2002 (2002-07-25), XP030037563, ISSN: 0000-0274
- SCHIERL T ET AL: "Mobile Video Transmission Using Scalable Video Coding", IEEE TRANSACTIONS ON CIRCUITS AND SYSTEMS FOR VIDEO TECHNOLOGY, IEEE SERVICE CENTER, PISCATAWAY, NJ, US, vol. 17, no. 9, 1 September 2007 (2007-09-01), pages 1204-1217, XP011193018, ISSN: 1051-8215, DOI: 10.1109/TCSVT.2007.905528

## Description

### FIELD OF THE INVENTION

The present invention relates to file transmission technologies, and in particular, to a method and an apparatus for transmitting a scalable video coding file, and a method and an apparatus for receiving the scalable video coding file.

### BACKGROUND OF THE INVENTION

With the development of technologies in recent years, TV systems encounter the same problem: A service need to be provided in a heterogeneous environment, where heterogeneous here refers to a difference of terminal capabilities, a difference of network bandwidths.

Taking an MTV as an example, an MTV service at present is mainly used by a mobile phone. Mainstream screen resolution of the mobile phone is QVGA (Quarter Video Graphics Array), namely, 320 x 240. However, the mobile phone is developed toward a high-definition video direction. In addition, terminals whose screen resolution is greater than the QVGA, such as a notebook computer with a wireless Internet access function, and a PDA (Personal Digital Assistant, personal digital assistant) are service objects of the MTV. Therefore, an MTV operator needs to consider how to simultaneously provide a video and audio file downloading service on the basis of a broadcast/multicast for terminals whose screen resolution is equal to or greater than the QVGA.

SVC (Scalable Video Coding, scalable video coding) is a coding technology capable of solving various types of problems of the difference of network bandwidths, a performance difference of receiving terminals, and a difference of resolutions in the heterogeneous environment. By using an SVC technology, a base layer and one or multiple enhancement layers may be obtained through one time of coding. The enhancement layer is used to enhance a video watching effect, and the enhancement layer cannot be decoded independently and can be decoded only after being combined with a base layer and a previous enhancement layer, so as to obtain a video with a specific bit rate, a specific frame rate, and specific resolution. The base layer and one or multiple enhancement layers are stored in a specific format to obtain an SVC file. With the increase of the enhancement layers, the SVC file may support various types of bit rates, frame rates, and resolutions. Specifics of the SVC file formats can be found in AMON P ET AL: "File Format for Scalable Video Coding", IEEE TRANSACTIONS ON CIRCUITS AND SYSTEMS FOR VIDEO TECHNOLOGY, IEEE SERVICE CENTER, PISCATAWAY, NJ, US, vol. 17, no. 9, 1 September 2007, pages 1174-1185. Further information on SVC technology is found for example in "VM Study Text for Scalable Video Coding (SVC) File Format", 73. MPEG MEETING;25-07-2005 - 29-07-2005; POZNAN; (MOTION PICTURE EXPERT GROUP OR ISO/IEC JTC1/SC29/WG11), no. N7477, 13 August 2005, or YE-KUI WANG ET AL: "ISO/IEC 14496-15/FPDAM 2 (SVC File Format)", 82. MPEG MEETING; 22-10-2007 - 26-10-2007; SHENZHEN; (MOTION PICTURE EXPERT GROUP OR ISO/IEC JTC1/SC29/WG11),, no. M15002, 23 October 2007 (2007-10-23) or THOMAS RATHGEN ET AL: "Proposal for SVC File Format Specification", 73. MPEG MEETING; 25-07-2005 - 29-07-2005; POZNAN; (MOTION PICTUREEXPERT GROUP OR ISO/IEC JTC1/SC29/WG11),, no. M12345, 20 July 2005.

US2007110150 A1 discloses a system for efficient scalable stream adaptation. US2007016594 A1 discloses modification to the SVC standard by providing extensions to store and access video content. The extensions provide means for extracting sub-streams or layers from a single track of scalable video data stored in the media data section. US2006233241 A1 provides a method for improved fine granularity scalability identification in scalable video coding. WO2007080502 A2 provides an indirect aggregator NAL unit for the SVC file format and RTP payload format for video coding. WO2006109154 A1 provides a method of encoding scalable video data having multiple layers where each layer in the multiple layers is associated with at least one other layer The method includes identifying one or more layers using a first identifier where the first identifier indicates decoding dependency, and identifying reference pictures within the identified one or more layers using a second identifier. SCHIERL T ET AL: "Mobile Video Transmission Using Scalable Video Coding", IEEE TRANSACTIONS ON CIRCUITS AND SYSTEMS FOR VIDEO TECHNOLOGY, vol. 17, no. 9, 1 September 2007, pages 1204-1217, proposes multicast transmission of SVC data with distribution of different layers in different FLUTE sessions.

The prior art has the following disadvantages: With a technology based on a FLUTE protocol for transmitting or receiving an SVC file in the prior art (see for example PAILA T ET AL: "FLUTE - File Delivery over Unidirectional Transport", NETWORK WORKING GROUP. REQUEST FOR COMMENTS: 3926, no. RFC 3926), a mobile phone needs to receive a complete SVC file including a base layer and all enhancement layers or even receive an SVC file group, which leads to a waste of a buffer space of a terminal, such as a mobile phone. Moreover, receiving a file including a base layer and all enhancement layers causes that file downloading time of the mobile phone becomes longer, and power consumption is increased.

### SUMMARY OF THE INVENTION

Embodiments of the present invention provide a method and an apparatus for transmitting a scalable video coding file, and a method and an apparatus for receiving the scalable video coding file. The present invention is as defined in the appended independent claims. By receiving one or multiple of files obtained by splitting an SVC file, a waste of a buffer space of a terminal is avoided, time of receiving a file is shortened, and power is saved.

### BRIEF DESCRIPTION OF THE DRAWINGS

To make the technical solutions in the embodiments of the present invention or in the prior art clearer, the accompanying drawings required for describing the embodiments are briefly introduced in the following. Obviously, the accompanying drawings in the following description are only some embodiments of the present invention, and persons of ordinary skill in the art may also derive other drawings from these accompanying drawings without any creative effort.
FIG. 1 is a schematic diagram of a format of an SVC file;
FIG. 2 is a schematic structural diagram of a FLUTE session;
FIG. 3 is a schematic diagram of a method for transmitting an SVC file according to a first embodiment of the present invention;
FIG. 4 is a schematic flowchart of step 120 shown in FIG 3;
FIG. 5 is a schematic diagram of a method for receiving a file according to the first embodiment of the present invention;
FIG. 6 is a schematic diagram of a method for transmitting an SVC file according to a second embodiment of the present invention;
FIG. 7 is a schematic diagram showing metadata in a base file citing media data from an enhancement file according to an embodiment of the present invention;
FIG. 8 is a schematic flowchart of step 320 shown in FIG. 7;
FIG. 9 is a flowchart of a method for receiving a file according to the second embodiment of the present invention;
FIG. 10 is a schematic flowchart of step 405 shown in FIG. 9;
FIG. 11 is a structural block diagram of an apparatus for transmitting a file according to an embodiment of the present invention;
FIG. 12 is a first schematic diagram of a transmitting unit shown in FIG. 11;
FIG. 13 is a second schematic diagram of a transmitting unit shown in FIG. 11;
FIG 14 is a third schematic diagram of a transmitting unit shown in FIG. 11; and
FIG 15 is a structural block diagram of an apparatus for receiving a file according to an embodiment of the present invention.

### DETAILED DESCRIPTION OF THE EMBODIMENTS

To help understand the embodiments of the present invention, an SVC file format and a FLUTE protocol in the prior art are described first.

Taking a heterogeneous scenario that requires a QVGA and a VGA for an example, an SVC technology may be used to obtain a base layer and an enhancement layer through one time of coding. The base layer is decoded to obtain a video with a QVGA format, and a combination of the base layer and the enhancement layer is decoded to obtain a video with a VGA format. During storage, the base layer may serve as a base track (base track) track 1 of an SVC file, and the combination of the base layer and the enhancement layer serves as an enhancement track (enhancement track) track 2 of the SVC file. Track 2 does not store a complete sample of the base layer and the enhancement layer (the sample here refers to a video frame), but stores an enhancement layer sample and an extractor directed to the base layer sample. When the SVC file is used, a file reader may synthesize a complete sample according to the extractor. Therefore, a required storage space is similar to a storage space required by a single VGA file.

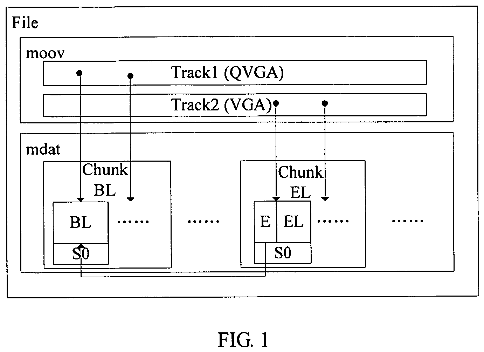

In an SVC file format shown in FIG. 1, moov represents a movie box (movie box), and is used to store metadata, namely, description about media data; mdat represents a media data box (media data box), and is used to store media data; BL represents a base layer (Base Layer); EL represents an enhancement layer (Enhancement Layer); E represents an extractor (extractor); S0 represents a sample (sample) numbered 0; a track (track) is a group of related samples; and a chunk (chunk) is continuous samples stored together physically in one track.

A FLUTE protocol is a point-to-multipoint file transfer protocol based on the IP protocol. In the FLUTE protocol, a file is carried by a TO (Transport Object, transport object), and the transport object is identified by a TOI (Transport Object Identifier, transport object identifier) that is allocated by a sending device. Many data packets are transmitted in a FLUTE session. A header of a data packet has a TOI field, and all data packets with the same TOI constitute a transport object.

Multiple transport objects are transmitted in one FLUTE session, and an FDT (File Delivery Table, file delivery table) instance may be used to specify a current file or a file to be transmitted in the session. For each file, in the FDT instance, a group of description information of the file (hereinafter referred to as description information of the file) is provided, and the description information of the file includes the following parameters:
Content_location: representing an identifier of the file, using a URI (Uniform Resource Identifier, uniform resource identifier) format, hereinafter referred to as FileURI, which is a mandatory parameter;
TOI: representing a transport object identifier, which is a mandatory parameter;
Content-length: representing a file size, which is an optional parameter;
Transfer-length: representing a size of the transport object, which is an optional parameter;
Content-Type: representing MIME (Multipurpose Internet Mail Extensions, Multipurpose Internet Mail Extensions) type of the file, which is an optional parameter;
Content-Encoding: representing a content encoding manner of the file, which is an optional parameter;
Content-MD5: representing an MD5 digest of the file, which is an optional parameter;
FEC-OTI-FEC-Encoding-ID, FEC-OTI-FEC-Instance-ID, FEC-OTI-Maximum-Source-Block-Length, FEC-OTI-Encoding-Symbol-Length, FEC-OTI-Max-Number-of-Encoding-Symbols, and FEC-OTI-Scheme-Specific-Info: representing FEC OTI (FEC Object Transmission Information, FEC object transmission information), an optional parameter; and
GroupID: representing an identifier of a file group that includes the file, which is an optional parameter.

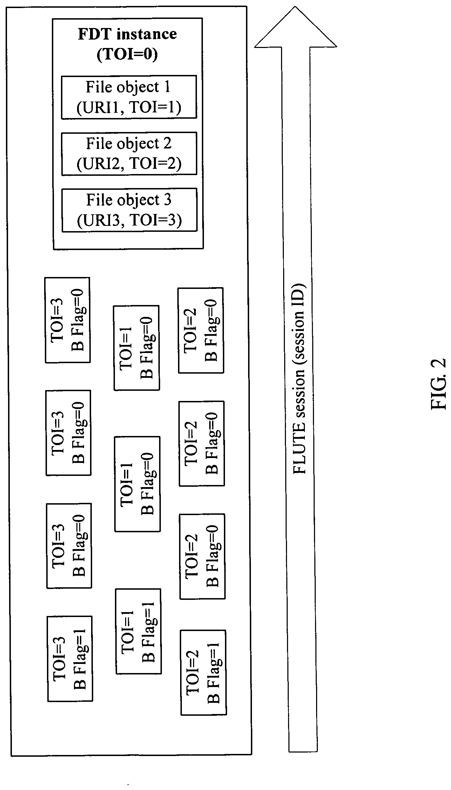

The FLUTE protocol specifies that a transport object with a transport object identifier TOI = 0 is used to transmit an FDT instance by default, as shown in FIG. 2.

The FLUTE protocol specifies that the FDT instance is an XML document, which may be extended randomly. If an XML parser cannot identify extended elements/attributes, the XML parser directly skips these elements/attributes.

With an existing FLUTE protocol-based file transmission/reception technology, a terminal needs to receive the whole file or even the whole file group: A receiving terminal does not regard that a file is received until the receiving terminal determines that a data packet that is enough for recovering a complete file is received; and if the receiving terminal needs to receive a file in a file group, the receiving terminal must receive all files in the file group unless the receiving terminal is pre-configured to ignore the file group, and at this time, the receiving terminal receives only this file.

Based on the preceding, the embodiments of the present invention provide a method for transmitting an SVC file and a method for receiving an SVC file, so that when an SVC file downloading service is provided based on a broadcast or multicast for a heterogeneous terminal, storage consumption and power consumption may be reduced for the terminal.

The present invention is described in further detail in the following with reference to the accompanying drawings.

### Embodiment 1

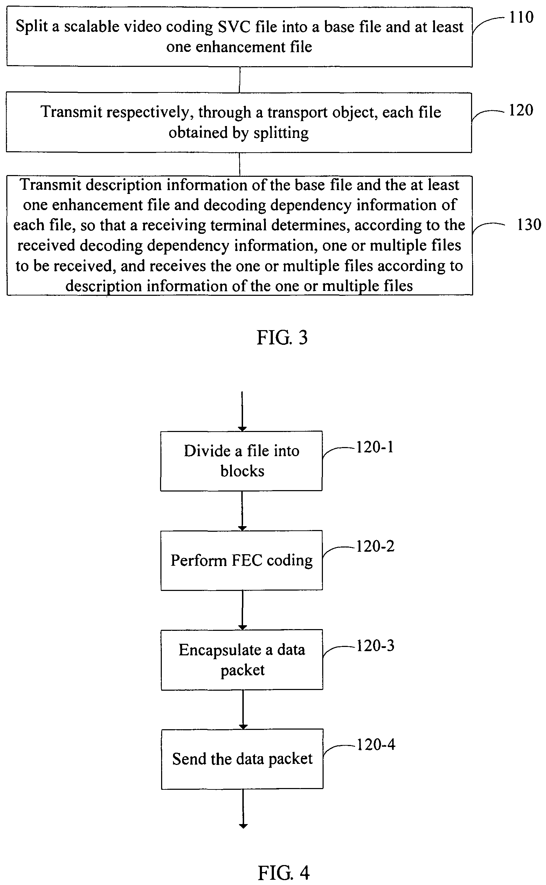

This embodiment provides a method for transmitting an SVC file. As shown in FIG 3, the method includes:
Step 110: A sending device splits a scalable video coding SVC file into a base file and at least one enhancement file.

For example, an SVC file includes media data of a base layer and media data of one or multiple enhancement layers. The base layer and the enhancement layer have different decoding dependency. The base layer has the lowest decoding dependency, and may be decoded independently. The enhancement layer cannot be decoded independently. The enhancement layer needs to be coded in combination with the base layer or in combination with the base layer and an enhancement layer with lower decoding dependency. That is, the enhancement layer is decoded depending on the base layer or depending on the base layer and an enhancement layer with lower decoding dependency. Before an SVC file is transmitted, the SVC file may be split into multiple (that is, at least two) files according to an adaptation requirement. One of the files is called a base file, and the other files are called enhancement files. A base layer and one or multiple enhancement layers are arranged in ascending order of decoding dependency, the base file includes media data of the base layer and media data of n enhancement layers (n = 0, 1, 2, 3...), and the base file may be decoded independently without depending on any other files, that is, the base file has the lowest decoding dependency. Enhancement layers that are not included in the base file may be divided into at least one group in ascending order of decoding dependency. Each group includes one or multiple enhancement layers, and each enhancement file includes media data of one group, namely, media data of one or multiple enhancement layers, that is, includes media data of a part or all of enhancement layers.

In this embodiment of the present invention, the adaptation requirements include but are not limited to: supporting a certain screen resolution, supporting a certain transmission bit rate, and supporting a certain frame rate. An operator may set an adaptation requirement collection function entity on a network side to collect adaptation requirements, and may also configure adaptation requirements manually. Because the operator provides a service in a heterogeneous environment, multiple adaptation requirements generally exist. Each file obtained by splitting an SVC file is corresponding to an adaptation requirement, that is, the number of files obtained by splitting is equal to the number of adaptation requirements. According to the adaptation requirement corresponding to the file obtained by splitting the SVC file, each file obtained by splitting the SVC file may include media data of one or multiple layers. For example, the adaptation requirements are to support three screen resolutions of a terminal: QVGA, HVGA, and VGA, namely, three adaptation requirements exist; and the SVC file includes a base layer, an enhancement layer 1, an enhancement layer 2, an enhancement layer 3, an enhancement layer 4, and an enhancement layer 5. Decoding dependency ascends from the enhancement layer 1 to the enhancement layer 5. A resolution of the enhancement layer 1 is QVGA, a resolution of the enhancement layer 3 is HVGA, and a resolution of the enhancement layer 5 is VGA. The resolution of the enhancement layer refers to a resolution of a video obtained by decoding a combination of the enhancement layer, the base layer, and an enhancement layer with lower decoding dependency. Therefore, according to the adaptation requirements, the SVC file is split into three files: a base file, an enhancement file 1, and an enhancement file 2. The base file includes media data of a base layer and media data of an enhancement layer 1. Enhancement layers 2 to 5 that are not included in the base file may be divided into two groups according to the adaptation requirements. A group 1 includes the enhancement layer 2 and the enhancement layer 3, and a group 2 includes the enhancement layer 4 and the enhancement layer 5. The enhancement file 1 includes the group 1, namely, media data of the enhancement layer 2 and media data of the enhancement layer 3; and the enhancement file 2 includes the group 2, namely, media data of the enhancement layer 4 and media data of the enhancement layer 5.

The media data of the enhancement layer can be decoded only when the media data of the enhancement layer is combined with at least the media data of the base layer. Therefore, the enhancement file obtained by splitting in this step is decoded also depending on at least the base file. Specifically, the enhancement file may be decoded when the enhancement file is combined only with the base file, or the enhancement file may be decoded only when the enhancement file is combined with the base file and another enhancement file. If decoding dependency of an enhancement layer included in the enhancement file is lower, other enhancement files on which decoding of the enhancement file depends are fewer, and decoding dependency of the enhancement file is lower.

That is, according to the decoding dependency of the base layer and/or the enhancement layer included in the file obtained by splitting, decoding dependency of this file may be determined. An enhancement file with lower decoding dependency is decoded depending on fewer files.

When splitting the SVC file according to the adaptation requirements, the sending device may read and parse metadata that is included in the SVC file to obtain an SVC file structure. A splitting mode may be different according to different SVC file structures. The file may be split according to a track (track), and may also be split according to a subset (tier) of the track, that is a sub-track. The tier refers to multiple groups into which samples (media data) in a track are divided according to a certain grouping rule. Each group includes one or multiple scalable layers. A grouping rule may be defined in many ways, for example, which include but are not limited to: based on the resolution, the frame rate, and a combination of the resolution and the frame rate.

After completion of the splitting, a file identifier, such as a FileURI, may be allocated to a file that is obtained by splitting.

Step 120: Each file obtained by splitting is carried through a transport object (TO) and transmitted respectively.

In another embodiment of the present invention, as shown in FIG. 4, step 120 is further divided into:
Step 120-1: Divide each file into blocks. For example, according to a requirement of an FEC (Forward Error Correction, forward error correction) algorithm, a file is physically divided into several source blocks (source blocks), and each source block is identified by an SBN (Source Block Number, source block number) which indicates a relative position in the TO.
Step 120-2: Perform FEC coding on the file that is divided into blocks. The coding may be performed by using multiple FEC schemes (schemes), including a Compact No-Code FEC scheme (compact no-code FEC scheme), a Compact FEC Scheme (compact FEC scheme), and a Small Block Systematic FEC Scheme (small block systematic FEC scheme).
Step 120-3: Encapsulate FEC-coded data into a data packet.
Step 120-4: Send the encapsulated data packet.
Step 130: Transmit description information of the base file and the at least one enhancement file and decoding dependency information of each file, so that a receiving terminal determines, according to the received decoding dependency information, one or multiple files to be received, and receives the one or multiple files according to description information of the one or multiple files.

An FDT instance may be generated according to multiple files to be transmitted. The FDT instance includes description information of each file, for example, an identifier of each file and a transport object identifier of each file. In this embodiment of the present invention, the decoding dependency information of each file may be set in the FDT instance for transmission, or may be transmitted through a separate file. In this embodiment of the present invention, dependency information of a file is used to indicate file information on which decoding of the file depends, and reflects a decoding dependency relationship with other files.

In this embodiment of the present invention, an SVC file may be split into multiple files according to an adaptation requirement. When data of a certain adaptation requirement needs to be satisfied, user equipment may receive only a split file corresponding to the adaptation requirement and a file on which decoding of the split file depends, but does not need to receive the whole SVC file or the file group, so that a waste of a buffer space of the user equipment is avoided, time for receiving a file is shortened, and power is saved.

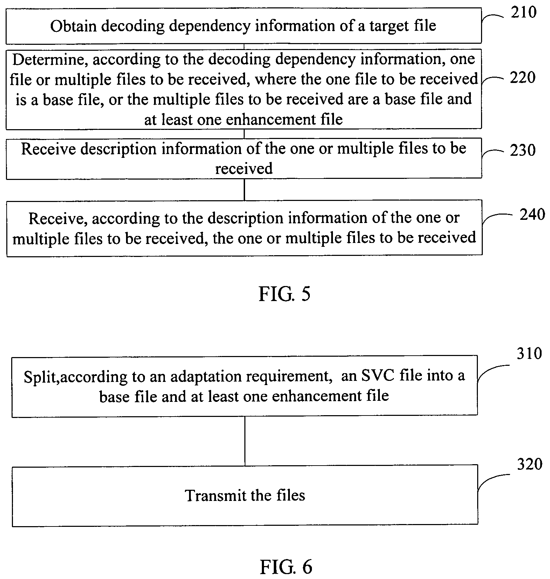

Accordingly, an embodiment of the present invention further provides a method for receiving a SVC file. The method may be implemented by a terminal that serves as a receiving terminal. As shown in FIG. 5, the method includes:
Step 210: Obtain decoding dependency information of a target file.

The target file may be a base file or an enhancement file after a scalable video coding (SVC) file is split into a base file and at least one enhancement file, where the base file includes at least media data of a base layer, and the enhancement file includes media data of a part or all of enhancement layers enhancement layer media data.

In practical application of the present invention, the receiving terminal receives an ESG (Electronic Service Guide, electronic service guide) first. A user or the receiving terminal selects a target file through the ESG, and ESG application transmits a file identifier FileURI of the target file to a file receiving terminal. The file receiving terminal may receive the file according to the file receiving method provided in this embodiment of the present invention. The target file is a base file or one of enhancement files, where the base file or the one of enhancement files is obtained by splitting an SVC file.

The ESG provides file description information that describes terminal capabilities directed to the file. A specific providing manner may be a text description that is used to be understood and selected by the user, and may also be an XML (Extensible Markup Language, extensible markup language) description that is used to be understood and selected by the terminal. The user or the receiving terminal generally selects a file that matches the receiving terminal capabilities, namely, a target file. The receiving terminal capabilities include but are not limited to a screen resolution of the receiving terminal, a codec algorithm supported by the receiving terminal, a network access bandwidth supported by the receiving terminal, and a buffer capacity of the receiving terminal. For example, an SVC file is split into a base file and two enhancement files. A resolution of the base file is QVGA, and resolutions of the two enhancement files are HVGA and VGA respectively. The resolution of the enhancement layer refers to a resolution of a video that is obtained by decoding a combination of the enhancement file and the base file and other enhancement files, where decoding of the enhancement file depends on the base file and other enhancement files. The ESG provides description information of three files, and indicates that resolutions of the three files or screen resolutions of receiving terminals directed to the three files are QVGA, HVGA, and VGA respectively. The user or the receiving terminal with the screen resolution of QVGA may select the base file as a target file, and the user or the receiving terminal with the screen resolution of HVGA or VGA may select one of the two enhancement file as a target file. The ESG provides the description information of the three files, which may further indicate that sizes of the three files are 100 MB, 200 MB, and 400 MB respectively. The user or the receiving terminal that has a buffer capacity of 500 MB may select the base file as a target file, and the user or the receiving terminal that has a buffer capacity of 4 GB may select one of the two enhancement files as a target file.

Step 220: Determine, according to the decoding dependency information, one file or multiple files to be received, where the one file to be received is a base file, or the multiple files to be received are a base file and at least one enhancement file.

For example, if it is determined, according to the decoding dependency information, that the target file has a decoding dependency file, the target file and the decoding dependency file of the target file are determined as the multiple files to be received.

If it is determined, according to the decoding dependency information, that the target file does not have a decoding dependency file, the target file is determined as the one file to be received.

In this embodiment, the decoding dependency file refers to a file on which decoding of the target file depends. The target file can be decoded only when the target file is combined with the decoding dependency file of the target file.

Step 230: Receive description information of the one or multiple files to be received.

The description information of the one or multiple files to be received may be respectively obtained from an FDT instance of the one or multiple files to be received, and the description information includes at least a transport object identifier.

Step 240: Receive, according to the description information of the one or multiple files to be received, the one or multiple files to be received.

According to the transport object identifier in the description information of the one or multiple files to be received, a data packet for carrying the one or multiple files to be received may be received.

After completion of receiving a file, the receiving terminal transmits the received file to an upper-layer application device, such as a player, and the application device decodes and presents the file.

In this embodiment of the present invention, according to different target files selected by the user or the receiving terminal, the receiving terminal receives one or multiple of multiple files (a base file and at least one enhancement file) obtained by splitting a complete SVC file. If the target file is a base file, the receiving terminal needs to receive only the target file; and if the target file is an enhancement file, the receiving terminal needs to receive only the target file and the decoding dependency file of the target file (namely, the base file and n other enhancement files on which the decoding of the target file depends, where n = 0, 1, 2, 3...), but does not need to receive other enhancement files on which the decoding of the target file does not depend, so that a waste of a buffer space of a terminal is avoided, time for receiving a file is shortened, and power is saved.

### Embodiment 2

This embodiment provides another method for transmitting a file. As shown in FIG 6, the method includes:
Step 310: A sending device splits, according to an adaptation requirement, a scalable video coding (SVC) file into a base file and at least one enhancement file.

In this embodiment of the present invention, the adaptation requirements include but are not limited to: supporting multiple kinds of screen resolutions, supporting multiple kinds of transmission bit rates, and supporting multiple kinds of frame rates. An operator may set an adaptation requirement collection function entity on a network side to collect adaptation requirements, and may also configure adaptation requirements manually.

The sending device may obtain an SVC file structure by reading and parsing metadata that is included in the SVC file. A splitting mode may be different according to different SVC file structures. The splitting mode may be a mode that is used to split according to a track, and may also be a mode that is used to split according to a tier (an operating point of the tier and a subset of a track). The tier refers to multiple groups into which samples (media data) in a track are divided according to a certain grouping rule. Each group includes one or multiple scalable layers. The grouping rule may be defined in many ways, for example, which include but are not limited to: based on a resolution, a frame rate, and a combination of the resolution and the frame rate. By taking that the samples are divided into two groups as an example, the grouping rule may be: a resolution of a group 1 is QVGA, a resolution of a group 2 is VGA, a frame rate of the group 1 is 15 frames per second, and a frame rate of the group 2 is 30 frames per second; or a resolution of the group 1 is QVGA and a frame rate of the group 1 is 15 frames per second, and a resolution of the group 2 is VGA and a frame rate of the group 2 is 30 frames per second.

The following is an example of splitting the SVC file according to tracks: For example, an adaptation requirement is to support receiving terminals with three kinds of screen resolutions: QVGA, HVGA, and VGA, and an SVC file structure is as follows, which includes a base track corresponding to the resolution of QVGA, two enhancement tracks corresponding to the resolution of HVGA and the resolution of VGA respectively. Therefore, the SVC file is split into a base file and two enhancement files according to tracks.

The following is an example of splitting the SVC file according to tiers: For example, an adaptation requirement is to support receiving terminals with three kinds of screen resolutions: QVGA, HVGA, and VGA. And an SVC file structure is as follows, which includes one track. The track includes three tiers, where a tier 1 is corresponding to the resolution of QVGA, a tier 2 is corresponding to the resolution of HVGA, and a resolution of a tier 3 is VGA. A resolution of the tier 2 is a resolution of a video that is obtained by jointly decoding the tier 1 and the tier 2; the resolution of the tier 3 is a resolution of a video that is obtained by jointly decoding the tier 1, the tier 2, and the tier 3. Therefore, the SVC file may be split into a base file and two enhancement files according to Tiers.

After the splitting mode of the file is determined, media data of the base layer and/or enhancement layers is extracted from a complete SVC file to form multiple files, where the media data of the base layer and/or enhancement layers is corresponding to an adaptation requirement. One of the files is called a base file, and others are called enhancement files. The base file includes media data of the base layer and n enhancement layers (n = 0, 1, 2, 3...), and the enhancement file includes media data of one or multiple enhancement layers that are not included in the base file.

After the SVC file is split into multiple files, FileURIs may be allocated to the files obtained by splitting, and decoding dependency information of the files is recorded. The decoding dependency information, for example, may be:
(1) a base file, independent of other files, and being decoded independently;
(2) an enhancement file 1, being decoded depending on the base file; and
(3) an enhancement file 2, being decoded depending on the base file and the enhancement file 1.

"Dependency" indicates that a file can be decoded only when the file is combined with another file on which the file depends.

In this embodiment of the present invention, the media data corresponding to the adaptation requirement is extracted to form multiple files by using multiple implementation methods, which are exemplified in the following:

### (1) Method 1

Media data is extracted, according to an adaptation requirement, from a complete SVC file to form a base file and at least one enhancement file. The enhancement file includes only media data of one or multiple enhancement layers that are not included in the base file, and the base file further includes metadata in addition to the media data of the base layer and the media data n enhancement layers (n = 0, 1, 2, 3...). The metadata describes a physical structure and a temporal structure of all media data included in multiple files that are obtained by splitting the complete SVC file, and the metadata for describing the temporal structure of the media data includes decoding time of the media data.

In this embodiment of the present invention, a file format adopted by the complete SVC file is based on an SVC file format, and the SVC file format is defined based on an ISO (International Standards Organization, International Standards Organization) file format. The following is an example for describing specific implementation of the method 1.

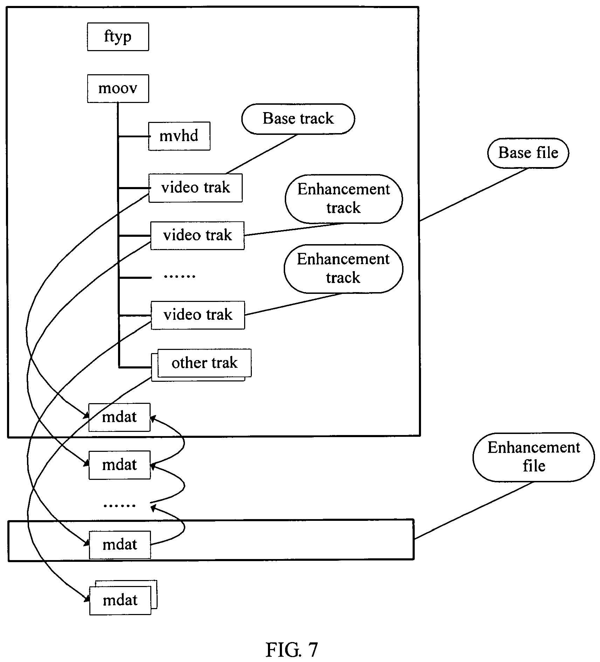

FIG. 7 illustrates a complete SVC file. In FIG. 7, "ftyp" represents file type boxes (file type boxes); "mvhd" represents a movie header box (movie header box); and "Trak" represents a track box (track box). All the boxes are used to store metadata, "ftyp" is used to store a protocol version used by a file; "mvhd" is used to store global description information of a movie, such as production time, modification time, and duration of the movie; and metadata in "trak" is used to store a single track, which includes description of a physical structure and a temporal structure of the media data in the track.

As shown in FIG. 7, the complete SVC file includes multiple video tracks and at least one of other tracks. The at least one of other tracks may be an audio track or a caption track; and the multiple video tracks include a base track and at least one enhancement track. In this example, multiple adaptation requirements exist, and the base track and each enhancement track respectively include video media data corresponding to a certain adaptation requirement. The video media data in each enhancement track is extracted from a complete SVC file respectively, and is stored to form each enhancement file. The video media data in the base track, and media data such as an audio or caption in other tracks, and the metadata are extracted from the complete SVC file, and are stored to form a base file. A file format adopted by the base file is still based on the ISO file format. A file format adopted by the enhancement file is not defined absolutely. In practical application of the present invention, a developer may define a format of the enhancement file, for example, store the extracted media data as a data file according to a binary order.

The metadata in the base file is used to describe a physical structure and a temporal structure of all media data that is included in multiple files obtained by splitting the complete SVC file. A physical storage location of the media data changes after the splitting. For example, before the splitting, the media data is stored at a specific physical storage location in the complete SVC file; but after the splitting, the media data is stored at a specific physical storage location in the base file or the enhancement file. The metadata that describes the physical structure of the media data in the base file needs to be modified, so that the metadata is directed to a new physical storage location. The metadata that describes the physical structure of the media data includes a FileURI of a file including the media data, and a storage location of the media data in this file. Therefore, after the splitting, FileURIs need to be allocated respectively to the base file and the enhancement file that are obtained by the splitting, the metadata that describes the physical structure of the media data in the base file is modified, the FileURI is modified to a FileURI of the base file or enhancement file, where the base file or enhancement file includes the media data after the splitting, and the storage location is modified to a storage location in the base file or enhancement file, where the base file or enhancement file includes the media data after the splitting, so that the modified metadata is directed to a new physical storage location. For example, for a certain piece of media data in the enhancement file, all metadata before the splitting is stored in the SVC file, and the metadata that describes the physical storage location of the media data is directed to a physical storage location in the complete SVC file; all metadata after the splitting is included in the base file, and the metadata that describes the physical storage location of the media data needs to be modified, so that the metadata is directed to a physical storage location in the enhancement file.

### (2) Method 2

A difference from the method 1 lies in that metadata are collectively stored in the base file, and in this method, the metadata is stored in the base file and each enhancement file in a distributed way. That is, the base file and each enhancement file all include the metadata, and metadata in a file is only used to describe media data that is included in this file. The metadata describes a physical structure and a temporal structure of the media data included in this file, and the metadata used for describing the temporal structure of the media data includes decoding time of the media data.

Media data stored in an enhancement track is formed by an extractor and enhancement layer media data. Through the extractor, media data of a base layer and media data of an enhancement layer with lower decoding dependency may be cited. In the prior art, the extractor is defined as follows:

```
 class aligned(8) Extractor () {
      NALUnitHeader();
      unsigned int(8) track_ref_index;
      signed int(8) sample_offset;
      unsigned int((lengthSizeMinusOne+1)∗8)
              data_offset;
      unsigned int((lengthSizeMinusOne+1)∗8)
              data-length; }
```

Through the "track_ref_index" in the extractor, an identifier of a track corresponding to media data of the base layer or the enhancement layer with lower decoding dependency may be obtained by searching metadata of a current track, where the media data of the base layer or the enhancement layer with lower decoding dependency is to be cited. According to the identifier of the track, metadata of the track may be found. The metadata is directed to a physical storage location of the media data of the base layer and the enhancement layer with lower decoding dependency. In this way, the media data of the base layer and the enhancement layer with lower decoding dependency may be cited.

In the prior art, a trackID is used as a track identifier, and uniquely identifies a track in only one presentation (a presentation refers to a combination of a video track described by file metadata and other tracks). Therefore, in the prior art, citation of only media data in the same presentation can be implemented.

In the method 2, the base file and the enhancement file are different presentations. Therefore, the prior art needs to be extended, and in the metadata of the enhancement file, a FileURI and a trackID may be used to jointly identify a track corresponding to media data to be cited, so that citation of media data in another presentation is implemented. In an existing SVC file format, decoding time of the media data of the base track and decoding time of the media data of the enhancement track may be obtained from the metadata of the SVC file, and the media data of the base track and the media data of the enhancement track are synchronized according to the decoding time. Similarly, in the method 2, decoding time of media data of the enhancement file and decoding time of media data of the base file may be obtained from the metadata of the enhancement file and the base file respectively, and the media data of the base file and the media data of the enhancement file are synchronized according to the decoding time.

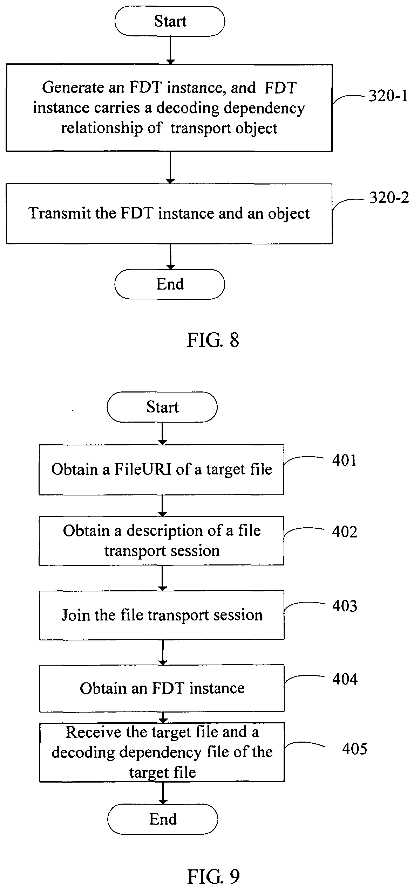

Step 320: Transmit the files obtained by splitting. As shown in FIG. 8, this step is further divided into:
Step 320-1: Use a transport object (TO) to carry each file that is obtained by splitting, and generate an FDT instance. The FDT instance carries description information of each file and decoding dependency information of each file.
Step 320-2: Transmit the FDT instance and each transport object.

In an embodiment of the present invention, the decoding dependency information of each file is carried in the FDT instance in step 320-1 by using multiple methods. The following gives an example for description.

### (1) Method 1

The description information of each file in the FDT instance is extended. Identifiers of a group of files (0 to more files) on which the decoding of the file depends are added in the description of the file, so as to indicate a decoding dependency relationship between the file and other files.

In addition, as another embodiment of the present invention, optionally, a decoding dependency type identifier may further be added to the FDT instance to indicate a cause for the decoding dependency. For example, a value of the decoding dependency type identifier is lay, indicating that the decoding dependency is caused by layered coding. If the decoding dependency is caused by other reasons, for example, there are a key file and a media file, and decoding of the media file depends on the key file, other values may be set.

A corresponding XML of the FDT instance may be defined as:

```
 <complexType name = "FileType">
      <sequence>
              <element name="DependencyOn" type="anyURI" minOccurs="0"
              maxOccurs="unbounded">
              <element name="DependencyType" type="string" minOccurs="0">
      </sequence>
 </complexType>.
```

When the SVC file is split into a base file and an enhancement file, if a FileURI of the base file is http://www.example.com/SVCfile/trackl and a FileURI of the enhancement file is http://www.example.com/SVCfile/track2, decoding of the base file http://www.example.com/SVCfile/trackl does not depend on other files, but decoding of the enhancement file http://www.example.com/SVCfile/track2 depends on the base file http://www.example.com/SVCfile/track1. At this time, the description information of the base file and the enhancement file in the FDT instance may be:

```
 //description information of the base file
      <File
              Content-Type="video/3gpp-svc"
              Content-Length="7543 "
              Transfer-Length="4294"
              TOI="2"
              FEC-OTI-Encoding-Symbol-Length=" 16"
              FEC-OTI-Scheme-Specific-Info="AAEBBA=="
              Content-Location=http://www.example.com/SVCfile/track1/>
 //description information of the enhancement file
      <File
              Content-Type="video/3gg-svc"
              Content-Length="161934"
              Transfer-Length="157821"
              TOI="3"
              FEC-OTI-Encoding-Symbol-Length="512"
              Content-Location=http://www.example.com/SVCfile/track2>
      <dependencyOn>http://www.example.com/SVCfile/track1</dependencyOn>
      </File>.
```

Because the decoding of the base file does not depend on any other file, the description information of the base file includes a file identifier of 0 decoding dependency file; because the decoding of the enhancement file http://www.example.com/SVCfile/track2 depends on the base file http://www.example.com/SVCfile/track1, the description information of the enhancement file includes a file identifier http://www.example.com/SVCfile/trackl of 1 decoding dependency file.

### (2) Method 2

In this method, all files obtained by splitting the complete SVC file are used as a logical combination, namely, a file group. Description of the file group is added in the FDT instance, so as to describe a decoding dependency relationship between files through the description of the file group. The description of the file group includes a group identifier and multiple groups of description information. Each group of description information includes a file identifier of a file and a file identifier of a decoding dependency file on which decoding of the file depends on, and is used to describe a decoding dependency relationship between the file and other files. Optionally, file group description information may further include a group type identifier that is used to indicate whether a decoding dependency relationship exists between files in the group. For example, a value of the group type identifier is DDP (decoding dependency), indicating that a decoding dependency relationship exists between the files in the group.

In addition, as another embodiment of the present invention, optionally, a decoding dependency type identifier may further be added to the FDT instance to indicate a cause for a decoding dependency relationship between files. For example, a value of the decoding dependency type identifier is lay, indicating that the decoding dependency is caused by layered coding. If the decoding dependency is caused by other reasons, for example, there are a key file and a media file, and decoding of the media file depends on the key file, other values may be set.

An XML of a file group description may be defined as follows:

```
 <complexType name = "FileGroupType">
      <sequence>
              <element name="HowDependent"
              type="mbms:HowDependentType" maxOccurs="unbounded">
      </sequence>
      <attribute name="GroupType" type="string" use="optional">
      <attribute name="GroupID" type="mbms: groupIdType" use="required">
 </complexType>
 <complexType name = "HowDependentType">
      <sequence>
              <element name="Dependency" type="anyURI">
              <element name="DependencyOn" type="anyURI"
              maxOccurs="unbounded">
      </sequence>
      <attribute name="DependencyType" type="string" use="optional">
 </complexType>.
```

A specific embodiment is described as follows: An SVC file is split into a base file and an enhancement file; a FileURI of the base file is http://www.example.com/SVCfile/trackl and a FileURI of the enhancement file is http://www.example.com/SVCfile/track2; and the two files make up a group 1. At this time, a description of the base file, the enhancement file, and a file group in an FDT instance may be:

```
 //description information of the base file
      <File
              Content-Type="video/3gpp-svc"
              Content-Length="7543"
              Transfer-Length="4294"
              TOI="2"
              FEC-OTI-Encoding-Symbol-Length="16"
              FEC-OTI-Scheme-Specific-Info="AAEBBA=="
              Content- Location=http://www.example.com/SVCfile/track1
              groupID="1"/>
 //description information of the enhancement file
      <File
              Content-Type="video/3gg-svc"
              Content-Length="161934"
              Transfer-Length="157821"
              TOI="3"
              FEC-OTI-Encoding-Symbol-Length="512"
              Content-Location=http://www.example.com/SVCfile/track2
              groupID="1"/>
 //description information of the file group
      <Filegroup
              groupType="DDP"
              groupID="1">
              <HowDependent
                      DependencyType="lay">
      <Dependency>http://www.example.com/SVCfile/track2</Dependency>
              <DependencyOn>http://www.example.com/SVCfile/track1
              </DependencyOn>
              </HowDependent>
      </Filegroup>
```

The description of the file group includes a group of description information indicating that decoding of the enhancement file http://www.example.com/SVCfile/track2 depends on the base file http://www.example.com/SVCfile/trackl. When this method is specifically implemented, the description information of the base file may not include a file group identifier. In this way, when the receiving terminal receives a target file that meets a certain adaptation requirement, where the target file is a base file, the receiving terminal does not need to obtain the file group description according to the file group identifier before searching the file group description for decoding dependency information corresponding to the target file, but may directly determine that a decoding dependency file of the target file does not exist, so that processing may be simplified and a resource may be saved.

### (3) Method 3

In this method, all files obtained by splitting the complete SVC file are used as a logical combination, namely, a file group. Description information of all files includes a groupID (groupID) field with the same value. A decoding dependency identifier of the file is added in the description information of the file to indicate decoding dependency of the file. By default, decoding of a file depends on a file with lower decoding dependency in the same file group. For example, the decoding dependency information is as follows: a base file is corresponding to a resolution in a QVGA format, and is decoded independently without depending on any other file; an enhancement file 1 is corresponding to a resolution in an HVGA format, and can be decoded depending on the base file; and an enhancement file 2 is corresponding to a resolution in a VGA format, and can be decoded depending on the base file and the enhancement file 1. A value of a decoding dependency identifier (dependency ID) of the base file may be 0, a value of a decoding dependency identifier of the enhancement file 1 may be 1, and a value of a decoding dependency identifier of the enhancement file 2 may be 2.

A corresponding XML may be defined as:

```
 <complexType name = "FileType">
      <sequence>
              < any namespace="##other" processContents="skip" minOccurs="0"
              maxOccurs="unbounded"/>
      </sequence>
      <attribute name="dependencyID" type="integer" use="required">
 </complexType>
```

In this embodiment of the present invention, an SVC file is split into multiple files according to an adaptation requirement. When data of a certain adaptation requirement needs to be satisfied, a receiving terminal may receive only a file that is corresponding to the adaptation requirement and obtained by splitting the SVC file, and a decoding dependency file, but does not need to receive the whole SVC file or a file group, so that a waste of a buffer space at a user equipment end is avoided, time for receiving a file is shortened, and power is saved.

Accordingly, an embodiment of the present invention further provides a method for receiving an SVC file. The method may be implemented by a terminal that serves as a receiving terminal. As shown in FIG. 9, the method includes the following steps:
Step 401: Obtain a file identifier FileURI of a target file.

The file identifier FileURI of the target file is generally transmitted by upper-layer application to the receiving terminal. For example, a user selects a target file through ESG (Electronic Service Guide, electronic service guide) application, and the ESG application transmits a FileURI of the target file to the receiving terminal.

Step 402: Obtain description of a file transport session to which the target file belongs.

The description of the file transport session includes: a source IP address, a transport session identifier (Transport Session Identifier, TSI, the TSI and the source IP address jointly identify a FLUTE session uniquely), a destination IP address, and a port. Generally, the description of the file transport session may be obtained from an SDP (Session Description Protocol, session description protocol) file.

The receiving terminal obtains an ESG first, where the ESG includes an obtaining address of the SDP file, or is directly embedded the SDP file. After selecting the target file, the receiving terminal may obtain and store the SDP file. That is, the SDP file is pre-stored on the receiving terminal before step 402, so that the receiving terminal may obtain the description of the file transport session from the SDP file.

Step 403: Join the file transport session.

The file transport session may be joined according to the description of the file transport session, where the description of the file transport session is obtained in step 402, which belongs to the prior art and is not described further in detail here.

Step 404: Obtain an FDT instance.

Because a default TOI of the FDT instance is 0, that is, a data packet with TOI = 0 in a packet header is used to carry the FDT instance. Therefore, this step may include:
Step 404-1: Receive data packets with TOI = 0 in the packet header, and buffer these data packets together.
Step 404-2: Judge whether a data packet that is enough for recovering a complete FDT instance is received.

The packet header of the data packet with TOI = 0 further includes FEC OTI information. According to the FEC OTI information, the number (N) of source blocks obtained by dividing the FDT instance and the number (n) of code symbols in each source block may be calculated. If the number of source blocks that are received by the receiving terminal is equal to N and the number of code symbols in each source block is equal to n, it is considered that the data packet that is enough for recovering the FDT instance is received. If the data packet that is enough for recovering the FDT instance is received, proceed to step 404-3; otherwise, go back to step 404-1.

Step 404-3: Parse the data packet received, and recover the FDT instance.

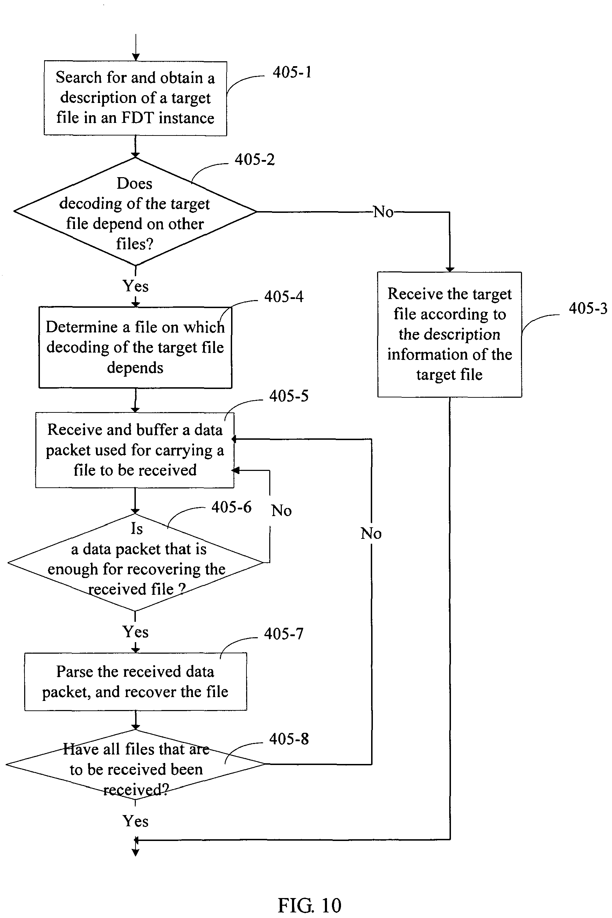

Step 405: Receive the target file and a decoding dependency file of the target file. As shown in FIG. 10, this step specifically includes:
Step 405-1: Search for and obtain description information of the target file in the FDT instance.
Step 405-2: Judge whether decoding of the target file depends on other files. According to different methods in which a decoding dependency relationship between files is carried in the FDT instance, judge whether a method in which decoding of the target file depends on other files is different, for example:
   (1) If the decoding dependency relationship between files is carried by using the method 1 in step 320-2 and the description information of the target file includes a FileURI of a file on which the decoding of the target file depends on, the decoding of the target file depends on other files.
   (2) If the decoding dependency relationship between files is carried by using the method 2 in step 320-2 and a file group description that is searched for and obtained in the FDT instance includes FileURIs of a group of files on which the decoding of the target file depends on, the decoding of the target file depends on other files.
   (3) If the decoding dependency relationship between files is carried by using the method 3 in step 320-2 and a decoding dependency identifier in description information of the target file is greater than 0, the decoding of the target file depends on other files.

If the decoding of the target file does not depend on any other file, only the target file needs to be received. The target file is the one file to be received. Proceed to step 405-3.

Step 405-3: Receive the target file according to the description information of the target file. A step for receiving the target file may be the same as a receiving step in the prior art. For example, this step may specifically include:
(1) Record a TOI of the target file. The description information of the target file includes the TOI of the target file.
(2) Receive data packets whose TOI value in the packet header is the same as the recorded TOI, and buffer these data packets together.
(3) Judge whether received data packets that are enough for recovering the target file are received. The description information of the target file includes the FEC OTI information. According to the FEC OTI information, the number (N) of source blocks obtained by dividing the target file and the number (n) of code symbols in each source block may be calculated. If the number of source blocks that are received by the terminal is equal to N and the number of code symbols in each source block is equal to n, it is considered that the data packet that is enough for recovering the target file is received. If the data packet that is enough for recovering the target file is received, proceed to step (4); otherwise, go back to step (2).
(4) Parse the received data packets and recover the target file.

If the decoding of the target file depends on any other file, the target file and a decoding dependency file of the target file need to be received. That is, the target file and the decoding dependency file of the target file are multiple files to be received. Proceed to step 405-4.

Step 405-4: Determine a file on which the decoding of the target file depends, namely, determine a decoding dependency file of the target file. The multiple files to be received are the target file and the decoding dependency file of the target file. TOIs of the multiple files to be received are recorded. According to different methods in which a decoding dependency relationship between files is carried in the FDT instance, a method for determining the decoding dependency file of the target file is different.

If the method 1 and method 2 in step 320-2 are used, a FileURI of the decoding dependency file of the target file can be obtained from a description of the target file or file group. According to the FileURI, description information of the decoding dependency file of the target file is searched for and obtained in the FDT instance, and a TOI of the decoding dependency file of the target file is obtained from the description information.

If the method 3 in step 320-2 is used, the FDT instance needs to be scanned, and the DDP files of the target file are the files whose description information includes the same group ID and whose decoding dependency ID is less than the decoding dependency ID of the target file.

Step 405-5: Receive and buffer data packets used for carrying the multiple files to be received, namely, receive the data packets whose TOI value in the packet header is the same as the recorded TOI. There are at least two files to be received. These data packets are buffered in groups according to the TOI, namely, the data packets with the same TOI are buffered together.

Step 405-6: For each file to be received, judge, according to FEC OTI information in description information of the file, whether a data packet that is enough for recovering the file is received. If the data packet that is enough for recovering the file is not received, go back to step 405-5; and if the data packet that is enough for recovering the file is received, proceed to step 405-7.

Step 405-7: Parse the received data packets, and recover the file.

Step 405-8: Judge whether all files to be received are received; if all the files to be received are received, end the procedure; and if all the files to be received are not received, go back to step 405-5.

After completion of receiving the file, the receiving terminal transmits the file to the upper-layer application device, for example, a player, and the application device decodes and presents the file.

In this embodiment of the present invention, the terminal receives the target file and the decoding dependency file of the target file rather than the complete SVC file, so that a waste of buffer of a terminal is avoided and power consumption is reduced.

### Embodiment 3

This embodiment further provides a method for transmitting an SVC file. This embodiment differs from the embodiment 2 in that a decoding dependency relationship between files is carried through a separate file rather than in an FDT instance, so that flexibility of a solution may further be improved. The file is called a decoding dependency relationship declaration file, and a format of the file may be XML, SVG, and so on.

In this embodiment, the decoding dependency relationship declaration file may be transmitted by using multiple methods, for example:
(1) Transmit description information of each decoding dependency relationship declaration file and an address of the decoding dependency relationship declaration file through an FDT instance.
   For example, the decoding dependency relationship declaration file and files obtained by splitting are put into the same FLUTE session for transmission. A DependencyDescription (DependencyDescription) element is added in description information of the files that are obtained by splitting in the FDT instance. A value is a FileURI of the decoding dependency relationship declaration file.
   In this way, when a receiving terminal receives a target file, the receiving terminal first obtains the FileURI of the decoding dependency relationship declaration file according to a DependencyDescription element in description information of the target file, and then obtains description information of the decoding dependency relationship declaration file from the FDT instance. The decoding dependency relationship declaration file is received from a FLUTE session according to the description information of the decoding dependency relationship declaration file. According to the decoding dependency relationship declaration file, which file on which decoding of the target file depends is determined, and the target file and a decoding dependency file of the target file are received.
(2) Transmit the address of the decoding dependency relationship declaration file through a content fragment or an access fragment of an electronic service guide.

For example, a DependencyDescription element is added in the content (content) fragment or the Access (access) fragment. A value is the FileURI of the decoding dependency relationship declaration file.

When the receiving terminal receives the target file, in the same way, the receiving terminal obtains the FileURI of the decoding dependency relationship declaration file according to a DependencyDescription element in the content fragment or the access fragment electronic service guide, where the content fragment or the access fragment is used for describing the target file in the electronic service guide, and then obtains the description information of the decoding dependency relationship declaration file from the FDT instance. The decoding dependency relationship declaration file is received from the FLUTE session according to a description, the decoding dependency relationship declaration file is parsed, which file on which the decoding of the target file depends is determined, and the target file and a decoding dependency file of the target file are received.

As another alternative solution of the embodiment 1 of the present invention, the decoding dependency relationship between files may further be carried in the ESG rather than in the FDT instance. For example, FileURIs of a group of files on which the decoding of the target file depends may be added in a content fragment or an access fragment, where the content fragment or the access fragment is used for describing the target file in the ESG In this way, a decoding dependency relationship of the target file may further be obtained from the content fragment or the access fragment of the ESG, and thus the decoding dependency file of the target file is determined.

### Embodiment 4

This embodiment further provides a method for transmitting an SVC file. This embodiment differs from the preceding embodiment in that a decoding dependency relationship between files is carried through a TOI.

In the prior art, a transport object is identified through a TOI, and one transport object is used to carry one file. In this embodiment, the TOI is divided into two parts. The first part is still used to identify a transport object, and the second part is formed by a file group identifier and a decoding dependency identifier, and is used to describe a decoding dependency relationship between each file.

FileGroupIDLength and DependencyIDLength may be set in the FDT instance to describe a length of the file group identifier and a length of the decoding dependency identifier. A specific embodiment is as follows:
A base file is corresponding to a resolution in a QVGA format, and is decoded independently without depending on other files; an enhancement file 1 is corresponding to a resolution in an HVGA format, and can be decoded depending on the base file; and an enhancement file 2 is corresponding to a resolution in a VGA format, and can be decoded depending on the base file and the enhancement file 1.

The base file, enhancement file 1, and enhancement file 2 make up a file group, and an identifier of the file group is 1.

A decoding dependency identifier of the base file is 0, and a decoding dependency identifier of the enhancement file 1 is 1, and a decoding dependency identifier of the enhancement file 2 is 2.

In the FDT instance, the FileGroupIDLength is set to 12, namely, 12 bits are used to indicate a file group identifier; and the DependencyIDLength is set to 4, namely, 4 bits are used to indicate a decoding dependency identifier. Therefore, hexadecimal expressions of TOIs of the base file, enhancement file 1, and enhancement file 2 are 00010010, 00020011, and 00030012 respectively. The first 4 numbers are used to identify the transport object, which are 1, 2, and 3 respectively; the 3 numbers in the middle represent the file group identifier, which are all 1; and the last number represents the decoding dependency identifier, which are 0, 1, and 2 respectively.

### Embodiment 5

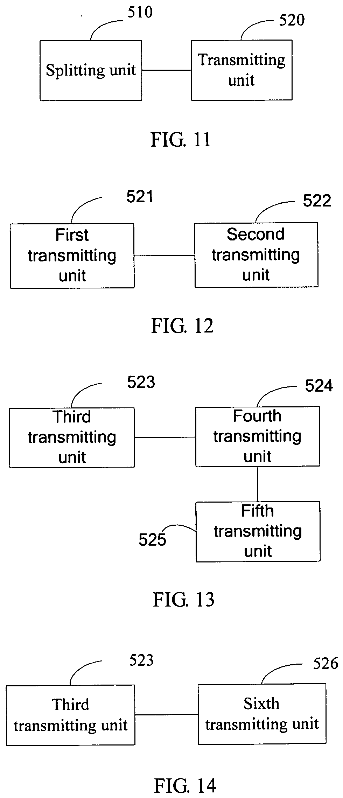

This embodiment provides an apparatus for transmitting an SVC file. As shown in FIG. 11, the apparatus includes:
A splitting unit 510 is configured to split the scalable video coding SVC file into a base file and at least one enhancement file, where the base file includes at least media data of a base layer, and the enhancement file includes media data of a part or all of enhancement layers enhancement layer media data; In a specific embodiment of the present invention, the splitting unit may split the scalable video coding SVC file into a base file and at least one enhancement file according to an adaptation requirement.

A transmitting unit 520 is configured to transmit each file obtained by splitting through a different transport object respectively, and transmit description information of the base file and the at least one enhancement file and decoding dependency information of each file, so that a terminal determines, according to received decoding dependency information, one or multiple files to be received, and receives the one or multiple files according to description information of the one or multiple files.

As another embodiment of the present invention, the transmitting unit 520 is further configured to transmit the description information of the base file and the at least one enhancement file and the decoding dependency information of each file through a file delivery table FDT instance.

As another embodiment of the present invention, the transmitting unit 520 is further configured to transmit the description information of the base file and the at least one enhancement file through a file delivery table instance, and transmit the decoding dependency information of each file through a set bit of a transport object identifier.

As another embodiment of the present invention, as shown in FIG. 12, the transmitting unit 520 includes:
a first transmitting unit 521, configured to transmit decoding dependency information of each file through a decoding dependency relationship declaration file; and
a second transmitting unit 522, configured to transmit description information of each file and an address of the decoding dependency relationship declaration file through a file delivery table instance.

As another embodiment of the present invention, as shown in FIG. 13, the transmitting unit 520 further includes:
a third transmitting unit 523, configured to transmit description information of each file through a file delivery table instance;
a fourth transmitting unit 524, configured to transmit an address of a decoding dependency relationship declaration file through an electronic service guide. In another embodiment of the present invention, the fourth transmitting unit 524 is configured to transmit the address of the decoding dependency relationship declaration file through a content fragment or an access fragment of the electronic service guide; and
a fifth transmitting unit 525, configured to transmit decoding dependency information of each file through the decoding dependency relationship declaration file.

As another embodiment of the present invention, as shown in FIG. 14, the transmitting unit 520 includes:
a third transmitting unit, configured to transmit description information of each file through a file delivery table instance; and
a sixth transmitting unit, configured to transmit an identifier of a decoding dependency file of each file through an electronic service guide. In another embodiment of the present invention, the sixth transmitting unit transmits the identifier of the decoding dependency file of each file through a content fragment or an access fragment of the electronic service guide.

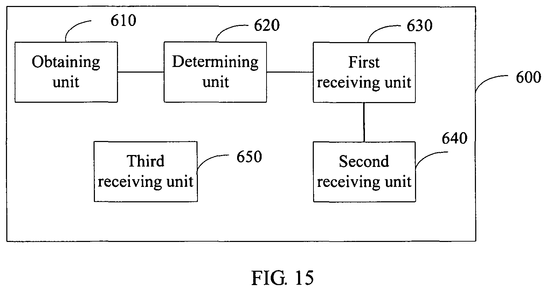

Accordingly, an embodiment of the present invention further provides a file receiving apparatus 600. As shown in FIG 15, the apparatus includes:
an obtaining unit 610, configured to obtain decoding dependency information of a target file, where the target file is a base file or an enhancement file, the base file includes at least media data of a base layer, and the enhancement file includes media data of a part or all of enhancement layers;
a determining unit 620, configured to determine, according to the decoding dependency information, one file or multiple files to be received, where the one file to be received is a base file, or the multiple files to be received are a base file and at least one enhancement file;
a first receiving unit 630, configured to receive description information of the one or multiple files to be received; and
a second receiving unit 640, configured to receive, according to the description information of the one or multiple files to be received, the one or multiple files to be received.

As another embodiment of the present invention, when the determining unit 620 determines, according to the decoding dependency information, that the target file has a decoding dependency file, the determining unit 620 determines the target file and the decoding dependency file as the multiple files to be received; and when the determining unit 620 determines, according to the decoding dependency information, that the target file does not have a decoding dependency file, determines the target file as the one file to be received.

As another embodiment of the present invention, the file receiving apparatus 600 further includes:
a third receiving unit 650, configured to receive an address of a decoding dependency relationship declaration file; and
the obtaining unit 610 is further configured to receive the decoding dependency relationship declaration file according to the address of the decoding dependency relationship declaration file, and obtain decoding dependency information of the target file.

In this embodiment of the present invention, a terminal receives one or multiple of files (a base file and at least one enhancement file) obtained by splitting a complete SVC file, so that a waste of buffer of a terminal is avoided, receiving time is shortened, and power consumption is saved. An embodiment of the present invention further provides a video coding file, and the video coding file is a base file or an enhancement file, where the base file or the enhancement file is obtained after a scalable video coding SVC file is split into a base file and at least one enhancement file. The base file includes at least media data of the base layer, the enhancement file includes media data of a part or all of enhancement layers, and decoding of the enhancement file depends on at least the base file.

In practical application of the present invention, the base file further includes metadata, and the metadata includes a description about the media data of the base file and the media data of the enhancement file.

In another practical application of the present invention, the base file further includes metadata, and the metadata includes a description about media data corresponding to the base file; and the enhancement file further includes metadata, and the metadata includes a description about media data corresponding to the enhancement file; and the enhancement file further includes an extractor that is directed to a depended file.

User equipment at a receiving terminal may receive and decode files in the video coding file as few as possible to obtain a required video, so that a waste of buffer of a terminal is avoided, receiving time is shortened, and power consumption is saved.

Persons of ordinary skill in the art may understand that all or part of the steps of the method in the preceding embodiments may be implemented by a program instructing relevant hardware. The program may be stored in a computer readable storage medium. When the program runs, the steps of the method in each preceding embodiment may be executed. The storage medium may be a magnetic disk, a optical disk, a read-only memory (Read-Only Memory, ROM), or a random access memory (Random Access Memory, RAM).

In the preceding embodiments, the objectives, technical solutions and benefit effects of the present invention are described in further detail. It should be understand that, the preceding descriptions are only specific embodiments, but are not intended to limit the protection scope of the present invention.

## Claims

1. A method for transmitting a scalable video coding file with a File Delivery over Unidirectional Transport, FLUTE, protocol, comprising:
Splitting, according to an adaptation requirement, the scalable video coding, SVC, file into a base file and at least one enhancement file (110), wherein the base file comprises at least media data of a base layer, and the enhancement file comprises media data of a part or all of enhancement layers;
transmitting respectively, through a different transport object, each file obtained by splitting (120), wherein the multiple transport objects are transmitted in one FLUTE session; and
transmitting description information of the base file and the at least one enhancement file and decoding dependency information of each file, the decoding dependency information allowing a terminal to determine which one or multiple files are to be received, and the description information allowing the terminal to receive the one or multiple files (130).

2. The method according to claim 1, wherein:
the base file further comprises metadata, and the metadata in the base file comprises a description about the media data corresponding to the base file; and
the enhancement file further comprises metadata, and the metadata in the enhancement file comprises a description about the media data corresponding to the enhancement file, or comprises a description about the media data corresponding to the enhancement file and an extractor that is directed to a depended file.

3. The method according to claim 1, wherein the decoding dependency information of each file comprises:
an identifier of each file, and an identifier of a decoding dependency file of each file; or
an identifier of each file, an identifier of a decoding dependency file of each file, and an identifier of the same file group to which each file belongs; or
an identifier of each file, an identifier of a decoding dependency file of each file, an identifier of the same file group to which each file belongs, and a file group type identifier, wherein the file group type identifier is used to indicate whether a decoding dependency relationship exists among files in the file group;
wherein the decoding dependency file is a file on which decoding of the target file depends.

4. The method according to claim 3, wherein:
the decoding dependency information of each file further comprises a decoding dependency type identifier, wherein the decoding dependency type identifier is used to indicate a cause for generating decoding dependency.

5. The method according to any one of claims 1 to 4, wherein the transmitting decoding dependency information of each file comprises:
transmitting the decoding dependency information of each file through a file delivery table, FDT, instance; or
transmitting the decoding dependency information of each file through a set bit of a transport object identifier; or
transmitting an address of a decoding dependency relationship declaration file through a file delivery table instance, and transmitting the decoding dependency information of each file through the decoding dependency relationship declaration file.

6. The method according to claim 1, wherein the transmitting decoding dependency information of each file comprises:
transmitting an address of a decoding dependency relationship declaration file through an electronic service guide, and transmitting the decoding dependency information of each file through the decoding dependency relationship declaration file; or
transmitting, through the electronic service guide, an identifier of a file on which decoding of each file depends.

7. A method for receiving a file by a file receiving apparatus (600) with a File Delivery over Unidirectional Transport, FLUTE, protocol, comprising:
Obtaining description information of a base file and at least one enhancement file and decoding dependency information of each file (210), wherein the base file comprises at least media data of a base layer, and the enhancement file comprises media data of a part or all of enhancement layers; wherein each file is obtained by splitting a scalable video coding, SVC, file;
determining, according to an adaptation requirement and to the decoding dependency information, one file or multiple files to be received, wherein the one file to be received is a base file, or the multiple files to be received are a base file and at least one enhancement file (220);
receiving description information of the one or multiple files to be received (230); and
receiving, according to the description information of the one or multiple files to be received, the one or multiple files to be received, wherein each file is received through a different transport object respectively, and wherein the multiple transport objects are received in one FLUTE session (240).

8. The method according to claim 7, wherein the determining, according to the decoding dependency information, one file or multiple files to be received comprises:
determining the target file and a decoding dependency file as the multiple files to be received if it is determined, according to the decoding dependency information, that the target file has the decoding dependency file; or
determining the target file as the one file to be received if it is determined, according to the decoding dependency information, that the target file does not have a decoding dependency file;
wherein the decoding dependency file is a file on which decoding of the target file depends.

9. The method according to claim 7, wherein, the method further comprises: receiving an address of a decoding dependency relationship declaration file; and
the obtaining decoding dependency information of a target file comprises: receiving the decoding dependency relationship declaration file according to the address of the decoding dependency relationship declaration file, and obtaining the decoding dependency information of the target file.

10. An apparatus (500) for transmitting a scalable video coding file, with a File Delivery over Unidirectional Transport, FLUTE, protocol, comprising:
a splitting unit (510), configured to split according to an adaptation requirement the scalable video coding, SVC, file into a base file and at least one enhancement file, wherein the base file comprises at least media data of a base layer, and the enhancement file comprises media data of a part or all of enhancement layers; and
a transmitting unit (520), configured to transmit respectively, through a different transport object, each file obtained by splitting, and transmit description information of the base file and the at least one enhancement file and decoding dependency information of each file, the decoding dependency information allowing a terminal to determine which one or multiple files are to be received, and the description information allowing the terminal to receive the one or multiple files;
wherein the multiple transport objects are transmitted in one FLUTE session.

11. The apparatus according to claim 10, wherein:
the transmitting unit is further configured to transmit the description information of the base file and the at least one enhancement file and the decoding dependency information of each file through a file delivery table instance; or
the transmitting unit is further configured to transmit the description information of the base file and the at least one enhancement file through a file delivery table instance, and transmit the decoding dependency information of each file through a set bit of a transport object identifier.

12. The apparatus according to claim 10, wherein the transmitting unit comprises:
a first transmitting unit (521), configured to transmit the decoding dependency information of each file through a decoding dependency relationship declaration file; and
a second transmitting unit (522), configured to transmit the description information of each file and an address of the decoding dependency relationship declaration file through a file delivery table instance.

13. The apparatus according to claim 10, wherein the transmitting unit comprises:
a third transmitting unit (523), configured to transmit the description information of each file through a file delivery table instance;
a fourth transmitting unit (524), configured to transmit an address of a decoding dependency relationship declaration file through an electronic service guide; and
a fifth transmitting unit (525), configured to transmit the decoding dependency information of each file through the decoding dependency relationship declaration file.

14. The apparatus according to claim 10, wherein the transmitting unit comprises:
a third transmitting unit (523), configured to transmit the description information of each file through a file delivery table instance; and
a sixth transmitting unit (526), configured to transmit, through an electronic service guide, an identifier of a file on which each file depends.

15. A file receiving apparatus (600) with a File Delivery over Unidirectional Transport, FLUTE, protocol, comprising:
an obtaining unit (610), configured to obtain description information of a base file and at least one enhancement file and decoding dependency information of each file, wherein the base file comprises at least media data of a base layer, and the enhancement file comprises media data of a part or all of enhancement layers; wherein each file is obtained by splitting a scalable video coding, SVC, file;
a determining unit (620), configured to determine, according to an adaptation requirement and to the decoding dependency information, one file or multiple files to be received, wherein the one file to be received is a base file, or the multiple files to be received are a base file and at least one enhancement file;
a first receiving unit (630), configured to receive description information of the one or multiple files to be received; and
a second receiving unit (640), configured to receive, according to the description information of the one or multiple files to be received, the one or multiple files to be received, wherein each file is received through a different transport object respectively, and wherein the multiple transport objects are received in one FLUTE session.

16. The file receiving apparatus according to claim 15, wherein:
the determining unit determines the target file and a decoding dependency file as the multiple files to be received when the determining unit determines, according to the decoding dependency information, that the target file has the decoding dependency file, and determines the target file as the one file to be received if the determining unit determines, according to the decoding dependency information, that the target file does not have a decoding dependency file.

17. The file receiving apparatus according to claim 15, further comprising:
a third receiving unit (650), configured to receive an address of a decoding dependency relationship declaration file; and
the obtaining unit is further configured to receive the decoding dependency relationship declaration file according to the address of the decoding dependency relationship declaration file, and obtain the decoding dependency information of the target file.

## Patentansprüche

1. Verfahren zur Übertragung einer skalierbaren Videokodierungsdatei mit einem Dateizustellung-über-unidirektionalen-Transport- ("File Delivery over Unidirektional Transport") (FLUTE) Protokoll, umfassend:
Aufteilen, gemäß einer Anpassungsanforderung, der skalierbaren Videokodierungs-, SVC, Datei, in eine Basisdatei und mindestens eine Verbesserungsdatei (110), wobei die Basisdatei mindestens Mediendaten einer Basisschicht umfasst und die Verbesserungsdatei Mediendaten eines Teils oder aller Verbesserungsschichten umfasst;
Übertragen, jeweils durch ein anderes Transportobjekt, jeder durch das Aufteilen (120) erhaltenen Datei, wobei die mehreren Transportobjekte in einer FLUTE-Sitzung übertragen werden; und
Übertragen von Beschreibungsinformationen der Basisdatei und der mindestens einen Verbesserungsdatei und Dekodierungsabhängigkeitsinformationen von jeder Datei, wobei die Dekodierungsabhängigkeitsinformationen einem Endgerät ermöglichen, zu bestimmen, welche eine oder mehreren Dateien empfangen werden sollen, und die Beschreibungsinformationen dem Endgerät ermöglichen, die eine oder die mehreren Dateien (130) zu empfangen.

2. Verfahren nach Anspruch 1, wobei:
die Basisdatei ferner Metadaten umfasst und die Metadaten in der Basisdatei eine Beschreibung der Mediendaten, die der Basisdatei entsprechen, umfassen; und
die Verbesserungsdatei ferner Metadaten umfasst, und die Metadaten in der Verbesserungsdatei eine Beschreibung der Mediendaten, die der Verbesserungsdatei entsprechen, umfassen, oder eine Beschreibung der Mediendaten, die der Verbesserungsdatei entsprechen, und einen Extraktor, der an eine abhängige Datei gerichtet ist, umfassen.

3. Verfahren nach Anspruch 1, wobei die Dekodierungsabhängigkeitsinformationen jeder Datei umfassen:
eine Kennung jeder Datei, und eine Kennung einer Dekodieruhgsabhängigkeitsdatei jeder Datei; oder
eine Kennung jeder Datei, eine Kennung einer Dekodierungsabhängigkeitsdatei jeder Datei, und eine Kennung derselben Dateigruppe, zu der jede Datei gehört; oder
eine Kennung jeder Datei, eine Kennung einer Dekodierungsabhängigkeitsdatei jeder Datei, eine Kennung derselben Dateigruppe, zu der jede Datei gehört, und eine Dateigruppentypkennung, wobei die Dateigruppentypkennung verwendet wird, um anzuzeigen, ob eine Dekodierungsabhängigkeitsbeziehung zwischen Dateien in der Dateigruppe besteht;
wobei die Dekodierungsabhängigkeitsdatei eine Datei ist, von der die Dekodierung der Zieldatei abhängig ist.

4. Verfahren nach Anspruch 3, wobei:
die Dekodierungsabhängigkeitsinformationen jeder Datei ferner eine Dekodierungsabhängigkeitstypkennung umfasst, wobei die Dekodierungsabhängigkeitstypkennung verwendet wird, um einen Grund zur Erzeugung einer Dekodierungsabhängigkeit anzuzeigen.

5. Verfahren nach einem der Ansprüche 1 bis 4, wobei das Übertragen von Dekodierungsabhängigkeitsinformationen jeder Datei umfasst:
Übertragen der Dekodierungsabhängigkeitsinformationen jeder Datei durch eine Dateizustellungstabellen- ("File Delivery Table"), FDT, Instanz; oder
Übertragen der Dekodierungsabhängigkeitsinformationen jeder Datei durch ein gesetztes Bit einer Transportobjektkennung; oder
Übertragen einer Adresse einer Dekodierungsabhängigkeitsbeziehungs-Deklarationsdatei über eine Dateizustellungstabelleninstanz und Übertragen der Dekodierungsabhängigkeitsinformationen jeder Datei durch die Dekodierungsabhängigkeitsbeziehungs-Deklarationsdatei.

6. Verfahren nach Anspruch 1, wobei das Übertragen von Dekodierungsabhängigkeitsinformationen jeder Datei umfasst:
Übertragen einer Adresse einer Dekodierungsabhängigkeitsbeziehungs-Deklarationsdatei über einen elektronischen Dienstführer und Übertragen der Dekodierungsabhängigkeitsinformationen jeder Datei durch die Dekodierungsabhängigkeitsbeziehungs-Deklarationsdatei; oder
Übertragen einer Kennung einer Datei, von der die Dekodierung jeder Datei abhängig ist, über den elektronischen Dienstführer.

7. Verfahren zum Empfangen einer Datei durch eine Dateiempfangsvorrichtung (600) mit einem Dateizustellung-über-unidirektionalen-Transport-, FLUTE, Protokoll, umfassend:
Erhalten von Beschreibungsinformationen einer Basisdatei und mindestens einer Verbesserungsdatei und von Dekodierungsabhängigkeitsinformationen jeder Datei (210), wobei die Basisdatei mindestens Mediendaten einer Basisschicht umfasst und die Verbesserungsdatei Mediendaten eines Teils oder aller Verbesserungsschichten umfasst; wobei jede Datei durch Aufteilen einer skalierbaren Videokodierungs-, SVC, Datei erhalten wird;
Bestimmen, gemäß einer Anpassungsanforderung und den Dekodierungsabhängigkeitsinformation, einer Datei oder mehrerer Dateien, die empfangen werden sollen, wobei die eine Datei, die empfangen werden soll, eine Basisdatei ist, oder die mehreren Dateien, die empfangen werden sollen, eine Basisdatei und mindestens eine Verbesserungsdatei (220) sind;
Empfangen von Beschreibungsinformationen der einen oder der mehreren Dateien (230), die empfangen werden sollen; und
Empfangen, gemäß den Beschreibungsinformation der einen oder der mehreren Dateien, der einen oder der mehreren Dateien, die empfangen werden sollen, wobei jede Datei durch ein anderes Transportobjekt empfangen wird und wobei die mehreren Transportobjekte in einer FLUTE-Sitzung (240) empfangen werden.

8. Verfahren nach Anspruch 7, wobei das Bestimmen, gemäß den Dekodierungsabhängigkeitsinformationen, einer Datei oder mehrerer Dateien, die empfangen werden sollen, umfasst:
Bestimmen der Zieldatei und einer Dekodierungsabhängigkeitsdatei als die mehreren Dateien, die empfangen werden sollen, wenn gemäß den Dekodierungsabhängigkeitsinformationen bestimmt wird, dass die Zieldatei die Dekodierungsabhängigkeitsdatei aufweist; oder
Bestimmen der Zieldatei als die eine Datei, die empfangen werden soll, wenn gemäß den Dekodierungsabhängigkeitsinformationen bestimmt wird, dass die Zieldatei keine Dekodierungsabhängigkeitsdatei aufweist;
wobei die Dekodierungsabhängigkeitsdatei eine Datei ist, von der die Dekodierung der Zieldatei abhängig ist.

9. Verfahren nach Anspruch 7, wobei das Verfahren ferner umfasst: Empfangen einer Adresse einer Dekodierungsabhängigkeitsbeziehungs-Deklarationsdatei; und
das Erhalten der Dekodierungsabhängigkeitsinformationen einer Zieldatei umfasst: Empfangen der Dekodierungsabhängigkeitsbeziehungs-Deklarationsdatei gemäß der Adresse der Dekodierungsabhängigkeitsbeziehungs-Deklarationsdatei und Erhalten der Dekodierungsabhängigkeitsinformationen der Zieldatei.

10. Vorrichtung (500) zur Übertragung einer skalierbaren Videokodierungsdatei mit einem Dateizustellung-über-unidirektionalen Transport-, FLUTE, Protokoll, umfassend:
eine Aufteilungseinheit (510), die dazu ausgelegt ist, gemäß einer Anpassungsanforderung die skalierbare Videokodierungs-, SVC, Datei in eine Basisdatei und mindestens eine Verbesserungsdatei aufzuteilen, wobei die Basisdatei mindestens Mediendaten einer Basisschicht umfasst, und die Verbesserungsdatei Mediadaten eines Teils oder aller Verbesserungsschichten umfasst; und
eine Übertragungseinheit (520), die dazu ausgelegt ist, durch ein anderes Transportobjekt, jede durch Aufteilung erhaltene Datei jeweils zu übertragen, und Beschreibungsinformation der Basisdatei und der mindestens einen Verbesserungsdatei und Dekodierungsabhängigkeitsinformationen jeder Datei zu übertragen, wobei die Dekodierungsabhängigkeitsinformationen es einem Endgerät ermöglichen, zu bestimmen, welche eine oder mehreren Dateien empfangen werden sollen, und die Beschreibungsinformationen es dem Endgerät ermöglichen, die eine oder die mehrere Dateien zu empfangen;
wobei die mehreren Transportobjekte in einer FLUTE-Sitzung übertragen werden.

11. Vorrichtung nach Anspruch 10, wobei:
die Übertragungseinheit ferner dazu ausgelegt ist, die Beschreibungsinformationen der Basisdatei und der mindestens einen Verbesserungsdatei und die Dekodierungsabhängigkeitsinformationen jeder Datei durch eine Dateizustellungstabelleninstanz zu übertragen; oder
die Übertragungseinheit ferner dazu ausgelegt ist, die Beschreibungsinformationen der Basisdatei und der mindestens einen Verbesserungsdatei durch eine Dateizustellungstabelleninstanz zu übertragen, und die Dekodierungsabhängigkeitsinformationen jeder Datei durch ein gesetztes Bit einer Transportobjektkennung zu übertragen.

12. Vorrichtung nach Anspruch 10, wobei die Übertragungseinheit umfasst:
eine erste Übertragungseinheit (521), die dazu ausgelegt ist, die Dekodierungsabhängigkeitsinformationen jeder Datei durch eine Dekodierungsabhängigkeitsbeziehungs-Deklarationsdatei zu übertragen; und
eine zweite Übertragungseinheit (522), die dazu ausgelegt ist, die Beschreibungsinformationen jeder Datei und eine Adresse der Dekodierungsabhängigkeitsbeziehungs-Deklarationsdatei über eine Dateizustellungstabelleninstanz zu übertragen.

13. Vorrichtung nach Anspruch 10, wobei die Übertragungseinheit umfasst:
eine dritte Übertragungseinheit (523), die dazu ausgelegt ist, die Beschreibungsinformationen jeder Datei durch eine Dateizustellungstabelleninstanz zu übertragen;
eine vierte Übertragungseinheit (524), die dazu ausgelegt ist, eine Adresse einer Dekodierungsabhängigkeitbeziehungs-Deklarationsdatei durch einen elektronischen Dienstführer zu übertragen; und
eine fünfte Übertragungseinheit (525), die dazu ausgelegt ist, die Dekodierungsabhängigkeitsinformationen jeder Datei durch die Dekodierungsabhängigkeitsbeziehungs-Deklarationsdatei zu übertragen.

14. Vorrichtung nach Anspruch 10, wobei die Übertragungseinheit umfasst:
eine dritte Übertragungseinheit (523), die dazu ausgelegt ist, die Beschreibungsinformationen jeder Datei durch eine Dateizustellungstabelleninstanz zu übertragen; und
eine sechste Übertragungseinheit (526), die dazu ausgelegt ist, eine Kennung einer Datei, von der jede Datei abhängig ist, durch einen elektronischen Dienstführer zu übertragen.

15. Dateiempfangsvorrichtung (600) mit einem Dateizustellung-über-unidirektionalen-Transport-, FLUTE, Protokoll, umfassend:
eine Erlangungseinheit (610), die dazu ausgelegt ist, Beschreibungsinformationen einer Basisdatei und mindestens einer Verbesserungsdatei und Dekodierungsabhängigkeitsinformationen jeder Datei zu erhalten, wobei die Basisdatei mindestens Mediendaten einer Basisschicht umfasst, und die Verbesserungsdatei Mediendaten eines Teils oder aller Verbesserungsschichten umfasst, wobei jede Datei durch Aufteilen einer skalierbaren Videokodierungs-, SVC, Datei erhalten wird;
eine Bestimmungseinheit (620), die dazu ausgelegt ist, gemäß einer Anpassungsanforderung und der Dekodierungsabhängigkeitsinformation eine Datei oder mehrere Dateien, die empfangen werden sollen, zu bestimmen, wobei die eine Datei, die empfangen werden soll, eine Basisdatei ist oder die mehreren Dateien, die empfangen werden sollen, eine Basisdatei und mindestens eine Verbesserungsdatei sind;
eine erste Empfangseinheit (630), die dazu ausgelegt ist, Beschreibungsinformationen der einen oder der mehreren Dateien, die empfangen werden sollen, zu empfangen; und
eine zweite Empfangseinheit (640), die dazu ausgelegt ist, gemäß den Beschreibungsinformationen der einen oder mehreren Dateien, die empfangen werden sollen, die eine oder die mehreren Dateien, die empfangen werden sollen, zu empfangen, wobei jede Datei durch ein anderes Transportobjekt empfangen werden soll, und wobei die mehreren Transportobjekte in einer FLUTE-Sitzung empfangen werden.

16. Dateiaufnahmegerät nach Anspruch 15, wobei:
die Bestimmungseinheit die Zieldatei und eine Dekodierungsabhängigkeitsdatei als die mehreren Dateien, die empfangen werden sollen, bestimmt, wenn die Bestimmungseinheit gemäß den Dekodierungsabhängigkeitsinformationen bestimmt, dass die Zieldatei die Dekodierungsabhängigkeitsdatei aufweist, und die Zieldatei als die Datei, die empfangen werden soll, bestimmt, wenn die Bestimmungseinheit gemäß den Dekodierungsabhängigkeitsinformationen bestimmt, dass die Zieldatei keine Dekodierungsabhängigkeitsdatei aufweist.

17. Dateiempfangsvorrichtung nach Anspruch 15, ferner umfassend:
eine dritte Empfangseinheit (650), die dazu ausgelegt ist, eine Adresse einer Dekodierungsabhängigkeitsbeziehungs-Deklarationsdatei zu empfangen; und
wobei die Erlangungseinheit ferner dazu ausgelegt ist, die Dekodierungsabhängigkeitsbeziehungs-Deklarationsdatei gemäß der Adresse der Dekodierungsabhängigkeitsbeziehungs-Deklarationsdatei zu empfangen, und die Dekodierungsabhängigkeitsinformationen der Zieldatei zu erhalten.

## Revendications

1. Procédé d'émission d'un fichier de codage vidéo échelonnable avec un protocole de distribution de fichier par transport unidirectionnel (FLUTE), le procédé consistant à :
diviser, selon une exigence d'adaptation, le fichier de codage vidéo échelonnable (SVC) en un fichier de base et au moins un fichier d'amélioration (110), le fichier de base comprenant au moins des données multimédias d'une couche de base, et le fichier d'amélioration comprenant des données multimédias d'une partie ou de la totalité des couches d'amélioration ;
émettre respectivement, par l'intermédiaire d'un objet de transport différent, chaque fichier obtenu par division (120), les multiples objets de transport étant émis dans une session FLUTE ; et
émettre une information de description du fichier de base et de l'au moins un fichier d'amélioration et une information de dépendance de décodage de chaque fichier, l'information de dépendance de décodage permettant à un terminal de déterminer quel fichier ou quels multiples fichiers doivent être reçus, et l'information de description permettant au terminal de recevoir le ou les multiples fichiers (130).

2. Procédé selon la revendication 1, dans lequel :
le fichier de base comprend en outre des métadonnées, et les métadonnées du fichier de base comprennent une description sur les données multimédias correspondant au fichier de base ; et
le fichier d'amélioration comprend en outre des métadonnées, et les métadonnées du fichier d'amélioration comprennent une description sur les données multimédias correspondant au fichier d'amélioration, ou comprennent une description sur les données multimédias correspondant au fichier d'amélioration et un extracteur qui est dirigé vers un fichier dépendant.

3. Procédé selon la revendication 1, dans lequel l'information de dépendance de décodage de chaque fichier comprend :
un identifiant de chaque fichier et un identifiant d'un fichier de dépendance de décodage de chaque fichier ; ou
un identifiant de chaque fichier, un identifiant d'un fichier de dépendance de décodage de chaque fichier et un identifiant du même groupe de fichiers auquel chaque fichier appartient ; ou
un identifiant de chaque fichier, un identifiant d'un fichier de dépendance de décodage de chaque fichier, un identifiant du même groupe de fichiers auquel chaque fichier appartient et un identifiant de type de groupe de fichiers, l'identifiant de type de groupe de fichiers étant utilisé pour indiquer si une relation de dépendance de décodage existe parmi des fichiers du groupe de fichiers ;
le fichier de dépendance de décodage étant un fichier dont dépend le décodage du fichier cible.

4. Procédé selon la revendication 3, dans lequel :
l'information de dépendance de décodage de chaque fichier comprend en outre un identifiant de type de dépendance de décodage, l'identifiant de type de dépendance de décodage étant utilisé pour indiquer une cause de la génération d'une dépendance de décodage.

5. Procédé selon l'une quelconque des revendications 1 à 4, dans lequel l'émission d'une information de dépendance de décodage de chaque fichier consiste à :
émettre l'information de dépendance de décodage de chaque fichier par l'intermédiaire d'une instance de table de distribution de fichier (FDT) ; ou
émettre l'information de dépendance de décodage de chaque fichier par l'intermédiaire d'un bit défini d'un identifiant d'objet de transport ; ou
émettre une adresse d'un fichier de déclaration de relation de dépendance de décodage par l'intermédiaire d'une instance de table de distribution de fichier, et émettre l'information de dépendance de décodage de chaque fichier par l'intermédiaire du fichier de déclaration de relation de dépendance de décodage.

6. Procédé selon la revendication 1, dans lequel l'émission de l'information de dépendance de décodage de chaque fichier consiste à :
émettre une adresse d'un fichier de déclaration de relation de dépendance de décodage par l'intermédiaire d'un guide électronique de services, et émettre l'information de dépendance de décodage de chaque fichier par l'intermédiaire du fichier de déclaration de relation de dépendance de décodage ; ou
émettre, par l'intermédiaire du guide électronique de services, un identifiant d'un fichier dont dépend le décodage de chaque fichier.

7. Procédé de réception d'un fichier par un appareil de réception de fichier (600) avec un protocole de distribution de fichier par transport unidirectionnel (FLUTE), le procédé consistant à :
obtenir une information de description d'un fichier de base et d'au moins un fichier d'amélioration et une information de dépendance de décodage de chaque fichier (210), le fichier de base comprenant au moins des données multimédias d'une couche de base, et le fichier d'amélioration comprenant des données multimédias d'une partie ou de la totalité des couches d'amélioration ; chaque fichier étant obtenu en divisant un fichier de codage vidéo échelonnable (SVC) ;
déterminer, selon une exigence d'adaptation et l'information de dépendance de décodage, un fichier ou de multiples fichiers à recevoir, le fichier à recevoir étant un fichier de base, ou les multiples fichiers à recevoir étant un fichier de base et au moins un fichier d'amélioration (220) ;
recevoir une information de description du fichier ou des multiples fichiers à recevoir (230) ; et
recevoir, selon l'information de description du fichier ou des multiples fichiers à recevoir, le fichier ou les multiples fichiers à recevoir, chaque fichier étant respectivement reçu par l'intermédiaire d'un objet de transport différent, et
les multiples objets de transport étant reçus dans une session FLUTE (240).

8. Procédé selon la revendication 7, dans lequel la détermination, selon l'information de dépendance de décodage, d'un fichier ou de multiples fichiers à recevoir consiste à :
déterminer le fichier cible et un fichier de dépendance de décodage en tant que multiples fichiers à recevoir s'il est déterminé, selon l'information de dépendance de décodage, que le fichier cible a le fichier de dépendance de décodage ; ou
déterminer le fichier cible en tant que fichier à recevoir s'il est déterminé, selon l'information de dépendance de décodage, que le fichier cible n'a pas de fichier de dépendance de décodage ;
le fichier de dépendance de décodage étant un fichier dont dépend le décodage du fichier cible.

9. Procédé selon la revendication 7, le procédé consistant en outre à :
recevoir une adresse d'un fichier de déclaration de relation de dépendance de décodage ; et
l'obtention d'une information de dépendance de décodage d'un fichier cible consistant à : recevoir le fichier de déclaration de relation de dépendance de décodage selon l'adresse du fichier de déclaration de relation de dépendance de décodage, et obtenir l'information de dépendance de décodage du fichier cible.

10. Appareil (500) d'émission d'un fichier de codage vidéo échelonnable avec un protocole de distribution de fichier par transport unidirectionnel (FLUTE), le procédé comprenant :
une unité de division (510), configurée pour diviser, selon une exigence d'adaptation, le fichier de codage vidéo échelonnable (SVC) en un fichier de base et au moins un fichier d'amélioration, le fichier de base comprenant au moins des données multimédias d'une couche de base, et le fichier d'amélioration comprenant des données multimédias d'une partie ou de la totalité des couches d'amélioration ; et
une unité d'émission (520), configurée pour émettre respectivement, par l'intermédiaire d'un objet de transport différent, chaque fichier obtenu par division, et émettre une information de description du fichier de base et de l'au moins un fichier d'amélioration et une information de dépendance de décodage de chaque fichier, l'information de dépendance de décodage permettant à un terminal de déterminer quel fichier ou quels multiples fichiers doivent être reçus, et l'information de description permettant au terminal de recevoir le ou les multiples fichiers ;
les multiples objets de transport étant émis dans une session FLUTE.

11. Appareil selon la revendication 10, dans lequel :
l'unité d'émission est en outre configurée pour émettre l'information de description du fichier de base et de l'au moins un fichier d'amélioration et l'information de dépendance de décodage de chaque fichier par l'intermédiaire d'une instance de table de distribution de fichier ; ou
l'unité d'émission est en outre configurée pour émettre l'information de description du fichier de base et de l'au moins un fichier d'amélioration par l'intermédiaire d'une instance de table de distribution de fichier, et émettre l'information de dépendance de décodage de chaque fichier par l'intermédiaire d'un bit défini d'un identifiant d'objet de transport.

12. Appareil selon la revendication 10, dans lequel l'unité d'émission comprend :
une première unité d'émission (521), configurée pour émettre l'information de dépendance de décodage de chaque fichier par l'intermédiaire d'un fichier de déclaration de relation de dépendance de décodage ; et
une deuxième unité d'émission (522), configurée pour émettre l'information de description de chaque et une adresse du fichier de déclaration de relation de dépendance de décodage par l'intermédiaire d'une instance de table de distribution de fichier.

13. Appareil selon la revendication 10, dans lequel l'unité d'émission comprend :
une troisième unité d'émission (523), configurée pour émettre l'information de description de chaque fichier par l'intermédiaire d'une instance de table de distribution de fichier ;
une quatrième unité d'émission (524), configurée pour émettre une adresse d'un fichier de déclaration de relation de dépendance de décodage par l'intermédiaire d'un guide électronique de services ; et
une cinquième unité d'émission (525), configurée pour émettre l'information de dépendance de décodage de chaque fichier par l'intermédiaire du fichier de déclaration de relation de dépendance de décodage.

14. Appareil selon la revendication 10, dans lequel l'unité d'émission comprend :
une troisième unité d'émission (523), configurée pour émettre l'information de description de chaque fichier par l'intermédiaire d'une instance de table de distribution de fichier ; et
une sixième unité d'émission (526), configurée pour émettre, par l'intermédiaire d'un guide électronique de services, un identifiant d'un fichier dont dépend chaque fichier.

15. Appareil de réception de fichier (600) avec un protocole de distribution de fichier par transport unidirectionnel (FLUTE), l'appareil comprenant :
une unité d'obtention (610), configurée pour obtenir une information de description d'un fichier de base et d'au moins un fichier d'amélioration et une information de dépendance de décodage de chaque fichier, le fichier de base comprenant au moins des données multimédias d'une couche de base, et le fichier d'amélioration comprenant des données multimédias d'une partie ou de la totalité des couches d'amélioration ; chaque fichier étant obtenu en divisant un fichier de codage vidéo échelonnable (SVC) ;
une unité de détermination (620), configurée pour déterminer, selon une exigence d'adaptation et l'information de dépendance de décodage, un fichier ou de multiples fichiers à recevoir, le fichier à recevoir étant un fichier de base, ou les multiples fichiers à recevoir étant un fichier de base et au moins un fichier d'amélioration ;
une première unité de réception (630), configurée pour recevoir une information de description du fichier ou des multiples fichiers à recevoir ; et
une deuxième unité de réception (640), configurée pour recevoir, selon l'information de description du fichier ou des multiples fichiers à recevoir, le fichier ou les multiples fichiers à recevoir, chaque fichier étant respectivement reçu par l'intermédiaire d'un objet de transport différent, et les multiples objets de transport étant reçus dans une session FLUTE.

16. Appareil de réception de fichier selon la revendication 15, dans lequel :
l'unité de détermination détermine le fichier cible et un fichier de dépendance de décodage en tant que multiples fichiers à recevoir quand l'unité de détermination détermine, selon l'information de dépendance de décodage, que le fichier cible a le fichier de dépendance de décodage, et détermine le fichier cible en tant que fichier à recevoir si l'unité de détermination détermine, selon l'information de dépendance de décodage, que le fichier cible n'a pas de fichier de dépendance de décodage.

17. Appareil de réception de fichier selon la revendication 15, comprenant en outre :
une troisième unité de réception (650), configurée pour recevoir une adresse d'un fichier de déclaration de relation de dépendance de décodage ; et
l'unité d'obtention étant en outre configurée pour recevoir le fichier de déclaration de relation de dépendance de décodage selon l'adresse du fichier de déclaration de relation de dépendance de décodage, et obtenir l'information de dépendance de décodage du fichier cible.
